(19)

Europäisches Patentamt

European Patent Office

Office européen des brevets

(11) **EP 4 391 337 A1**

(12) **EUROPEAN PATENT APPLICATION**

(43) Date of publication:
**26.06.2024 Bulletin 2024/26**

(21) Application number: **22215668.9**

(22) Date of filing: **21.12.2022**

(51) International Patent Classification (IPC):
**H02M 1/12** $^{(2006.01)}$   **H02M 1/00** $^{(2006.01)}$
**H02M 5/458** $^{(2006.01)}$   **H02M 7/493** $^{(2007.01)}$

(52) Cooperative Patent Classification (CPC):
**H02M 1/12; H02M 1/0043; H02M 5/458;
H02M 7/493**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ABB SCHWEIZ AG
5400 Baden (CH)**

(72) Inventors:
• **Tsoumas, Ioannis
8032 Zurich (CH)**
• **Pandiarajan, Prem
5430 Wettingen (CH)**

(74) Representative: **Sykora & König Patentanwälte
PartG mbB
Maximilianstraße 2
80539 München (DE)**

(54) **OPTIMIZED PULSE PATTERNS FOR MULTI-CONVERTER SET SYSTEM**

(57) A method of operating a converter system (18) with at least two converter sets (20) interconnected at a point of common connection (30) comprises: for each converter set (20) of the at least two converters, loading an optimized pulse pattern (36) from a table of optimized pulse patterns based on a pulse number and modulation index, wherein each optimized pulse pattern (36) comprises a set of switching transitions encoding at which switching angles ($\theta_i$) the converter set (20) is switched to a corresponding switching state; and modulating the respective converter set (20) with the respective optimized pulse pattern (36). The optimized pulse patterns (36) have switching transitions, such that each of the at least two converter sets (20) generates at least one higher order harmonic and the at least one higher order harmonic (38) of the at least two converter sets (20) cancels out at least partially at the point of common connection (30).

**Fig. 1**

EP 4 391 337 A1

**Description**

FIELD OF THE INVENTION

The invention relates to a method, a computer program, a computer-readable medium and a controller for operating a converter system. The invention also relates to the converter system and to a method for determining optimized pulse patterns.

BACKGROUND OF THE INVENTION

In wind farms, the voltage produced by the generator of the wind turbines usually has varying frequency and is converted into a network with constant frequency by a converter. The output voltages of the converters are supplied to a point of common connection, which is connected to a large scale, external electrical grid. Such converters usually are composed of a generator-side rectifier, which is connected via a DC link to a grid-side inverter. To transform the voltage from the generators to the grid voltage, also transformers may be interconnected between the inverters and the point of common connection.

The ability of the system to limit the converter-induced voltage and current harmonics depends to a great extent on the switching frequency of the grid-side inverters. When the grid-side inverters are modulated with optimized pulse patterns (OPPs), the magnitude of higher order harmonics can be reduced significantly. Furthermore, the usage of wye/delta-wye transformers may cancel some of the higher order harmonics nearly completely.

In medium voltage converters with IGCTs, the switching frequency of the semiconductors lies in the range of only some hundreds of Hz. Despite the employment of OPPs and the cancellation of harmonics that takes place in the wye/delta-wye transformer, some of the harmonics at the transformer primary may not fulfil the requirements of the system. One possibility would be to increase the switching frequency of the inverters, however, this would require an inverter derating. Another possibility would be the introduction of additional converters and transformer windings.

DESCRIPTION OF THE INVENTION

It is an objective of the invention to reduce higher order harmonics in multi-converter set systems, such as multi-wind-turbine systems.

This objective is achieved by the subject-matter of the independent claims. Further exemplary embodiments are evident from the dependent claims and the following description.

An aspect of the invention relates to a method of operating a converter system. The converter system comprises at least two converter sets interconnected at a point of common connection. The converter system may be part of a power plant such as a wind farm with a plurality of wind turbines or such as a solar power plant. In the case of a wind farm, each converter set may be supplied by a generator connected to a wind turbine. In the case of a photovoltaic power plant, each converter set may be connected to photovoltaic panels. Each converter set may be associated with a power source and/or the converter sets may be distant from each other. The converter sets may be used to convert their supply voltage into a voltage of a frequency supplied to the point of common coupling, which may be connected to an external electrical grid, such as a large scale electrical grid for transporting the electrical energy over large distances.

In general, the converter system also may be part of other electrical plants, in which two or more converter sets are connected to a common point of connection.

The converter sets as well as the converter system may be adapted to process a medium voltage, i.e. above 1000 V. Each converter set may be composed of one, two or more converters. Each converter may comprise a grid-side inverter, which is connected to the point of common connection, and optionally a rectifier, which is connected via a DC link with the inverter. In such a way, each converter set may comprise a rectifier set, which is connected via DC links with an inverter set. For example, the rectifier set may be supplied by the generator of a wind turbine.

The method comprises: for each converter set of the at least two converter sets, loading an optimized pulse pattern from a table of optimized pulse patterns based on a pulse number and modulation index, wherein each optimized pulse pattern comprises a set of switching transitions encoding at which switching angles the converter is switched to a corresponding switching state. The converter sets that are connected to the point of common coupling and in particular the grid-side inverter sets are modulated with suitably selected optimized pulse patterns. For more than one converter, rectifier and/or inverter per converter set, the converters, rectifiers and/or inverters may be modulated with the same optimized pulse pattern for the converter set, but optionally phase-shifted with respect to each other. In the controller, which controls the converter sets, a table with optimized pulse patterns indexed with respect to the pulse number and the modulation index is stored.

The optimized pulse patterns may have been calculated offline, i.e. before the operation of the converter sets.

The method comprises further: modulating the respective converter set with the respective optimized pulse pattern. During operation, a suitable pulse number and modulation index is determined, for example dependent on measurements in the converter set, and the corresponding pulse pattern is loaded for the respective converter set. Based on the fundamental frequency, switching times are determined from the switching angles and the semiconductor switches are switched at the switching times to the corresponding switching state according to the switching transitions as encoded in the optimized pulse pattern.

According to the invention, the optimized pulse patterns have switching transitions, such that each of the at least two converter sets generate at least one higher order harmonic and the at least one higher order harmonic of the at least two converter sets cancels each other at least partially at the point of common connection. At least some of the higher order harmonics are not reduced directly by the switching of one converter set with a specific optimized pulse pattern, but are reduced by cancellation at the point of common connection. In this way, the degrees of freedom when calculating the optimized pulse patterns may be used to reduce other higher harmonics even further and/or to achieve other optimization objectives.

The higher order harmonics are caused by the discrete switching of the converter sets and have specific frequencies, which are caused by the topology and switching scheme of the converter set. The produced higher order harmonics can be at least partially attenuated and amplified as well as phase shifted with the switching scheme and therefore set by the optimized pulse patterns. The optimized pulse patterns are selected, such that higher order harmonics of the same frequency produced by different converter sets cancel each other at least partially.

With the method, the higher order harmonics of the voltage and the current produced by the converter system, for example of a power plant, may be reduced. Selected higher order harmonics are partly or completely cancelled out in reference to a point of common coupling, which may connect the power plant to an external grid. The cancelling out may be achieved by adapting the phase and/or amplitude of the respective higher order harmonic. This adaption may be done differently for different optimized pulse patterns. The optimized pulse patterns, which are applied to different converter sets, may be different. I.e. there may be an individual set of optimized pulse patterns for each converter set and the individual sets may contain different optimized pulse patterns for the same modulation index and pulse number.

According to an embodiment of the invention, the at least two converter sets generate higher order harmonics of the same frequency, such that an amplitude of the sum of the generated high order harmonics of the same frequency at the point of common connection is smaller than a maximum value of the generated higher order harmonics of the same frequency. This may be achieved, when some of the instantaneous values are positive, while other of the instantaneous values are negative (phase difference of 180°) at the same time point. Two higher order harmonics produced by two converter sets may cancel out each other at least partially, when their instantaneous values have opposite signs (phase difference of 180°).

The amplitude and the phase of selected harmonics of the optimized pulse patterns employed in the modulation of each converter may be selected in such a way that the amplitude of their sum at the point of connection to the external grid is minimized. The sum of selected harmonics at the point of common coupling may be zero.

According to an embodiment of the invention, the at least two converter sets generate higher order harmonics of the same frequency, which are phase shifted with respect to each other, such that they cancel each other at least partially at the point of common coupling. For example, two higher order harmonics produced by two converters may cancel each other, when they are phase shifted by 180°.

According to an embodiment of the invention, the at least two converter sets generate higher order harmonics of the same frequency, which have equal amplitudes. When the amplitudes of the higher order harmonics are equal and the higher order harmonics of the same frequency are phase shifted by 360°/N, where N is the number of converters, then the higher order harmonics of the same frequency cancel each other completely.

According to an embodiment of the invention, each of the at least two converter sets generates more than one higher order harmonic, which cancel out with the higher order harmonics of the other converter sets. It may be that a set of frequencies is selected at which the higher order harmonics should cancel each other at least partially. At these sets of frequencies, which may comprise two or more frequencies, the higher order harmonics even may be high for the individual converters. Other frequencies then may be attenuated more strongly.

According to an embodiment of the invention, the method further comprises: calculating the optimized pulse patterns by considering the switching angles in a single optimization problem for all optimized pulse patterns of all considered converter sets. This calculation may be done offline, while the selection of the optimized pulse patterns and the modulation of the converters is done online. The optimization problem to be solved for their calculation, which may be solved for every modulation index and pulse number, produces a set of optimized pulse patterns for each converter set, which may be saved in the controller controlling the converter system.

In the optimization problem, not only one converter set is considered, but it is considered that the converter sets are interconnected at the point of common coupling. In particular, the switching angles and respective switching transitions of different converter sets are considered as independent variables.

According to an embodiment of the invention, the optimization problem comprises an objective function, demanding that the sum of the current ripples generated by the at least two converter sets is minimized, for example at the point of common connection or at the output of the converters.

The switch positions and/or values of the switching angles of the pulse patterns may be seen as variables, which can be varied, when solving the optimization problem. From the switching angles and the corresponding switching states, the output voltages and/or current harmonics of the converter sets can be calculated and therefrom functions, which can be optimized.

According to an embodiment of the invention, the optimization problem comprises a constraint that the higher order harmonics of a same frequency generated by the at least two converter sets cancel each other at least partially. The cancelation of the higher order harmonics may be included into the optimization problem in the form of a constraint, i.e. the objective function may be optimized subject to the constraint, that one or some of the higher order harmonics of a same frequency cancel each other at least partially.

According to an embodiment of the invention, the optimization problem comprises a constraint that a modulation index for each optimized pulse pattern for each of the at least two converter sets is met. The constraint may be an equality constraint. The pulse number may be defined by the number of switching angles per quarter-period or by the number of switching angles per half-period divided by two and may be fixed.

According to an embodiment of the invention, the optimization problem comprises a constraint that at least some of the higher order harmonics generated by the at least two converter sets are limited. Such a constraint may be a non-equality constraint. This may in particular constraint the higher order harmonics, which cancel each other at least partially, for example to avoid excitation of resonances in the cables that connect the point of common coupling to the external grid.

According to an embodiment of the invention, the optimization problem comprises a constraint that the amplitude of the sum of higher order harmonics of the same frequency generated by the at least two converter sets is limited. Such a constraint may be a non-equality constraint. With such a constraint, it is ensured that the amplitude of the sum is smaller than a limit, i.e. that the higher order harmonics cancel partially.

According to an embodiment of the invention, the optimization problem comprises a constraint that the amplitude of the sum of higher order harmonics of the same frequency generated by the at least two converter sets is 0. Such a constraint may be an equality constraint. With such a constraint, it is ensured that this sum is nearly 0, i.e. that the higher order harmonics cancel substantially completely.

According to an embodiment of the invention, the optimized pulse patterns have quarter-wave symmetry or optimized pulse patterns have half-wave symmetry. Half wave-symmetry may mean that the second half of the period the switching states of the optimized pulse pattern have the opposite sign of the first half and the switching angles of the second half are equal to the ones of the first half plus 180 degrees. Quarter-wave symmetry may mean that additionally the second quarter of the period is mirror symmetric to the first quarter and the fourth quarter mirror symmetric to the third quarter. Quarter-wave symmetry may simplify the optimization problem and the storage space needed for the optimized pulse patterns. Half-wave symmetry provides more degrees of freedom in the optimization problem.

According to an embodiment of the invention, for two converter sets two different optimized pulse pattern are loaded, which have been calculated with respect to different operating points. Besides modulation index and pulse number, the optimized pulse patterns also may be determined with respect to different operation points. An operation point may refer to the active and/or reactive power at the terminals of the converter set. The active and reactive power may be parameters of the optimization problem to be solved for calculation the optimized pulse pattern.

According to an embodiment of the invention, the optimized pulse pattern to be loaded is selected with respect to an operation point determined for the respective converter set. The active and/or reactive power at the terminals of the converter set may be determined and based on this, the respective optimized pulse pattern may be selected.

Different sets of optimized pulse patterns may be used for different operating points. This may account for a change in the phase displacement of the fundamental harmonics between the wind turbines and/or converter sets.

A further aspect of the invention relates to a converter system, which comprises at least two converter sets interconnected at a point of common connection and a controller and/or control system adapted for performing the method as described herein. The converter system may be part of a power plant and/or may be configured such as described herein.

According to an embodiment of the invention, a transformer is interconnected between each electrical converter set and the point of common connection. With such transformers, such as wye-wye and/or delta-wye transformers, further higher order harmonics may be reduced and/or eliminated.

A further aspect of the invention relates to a method for determining optimized pulse patterns. This may be done by a computing device offline, before the converter sets are modulated. The optimized pulse patterns may be stored in the one or more controllers of the converter system afterwards.

The method comprises: calculating optimized pulse patterns for at least two converter sets, which are connected at a point of common connection, each optimized pulse pattern for one of the at least two converter sets comprises a set of switching transitions encoding at which switching angles the converter is switched to a corresponding switching state. The optimized pulse patterns are calculated by modifying the switching angles in a single optimization problem for all optimized pulse patterns, until optimization objectives are reached. The optimization problem comprises an objective function, demanding that the sum of current ripples generated by the at least two converter sets is minimized. The optimization problem comprises a constraint that the amplitude of the sum of higher order harmonics of a frequency generated by the at least two converter sets is smaller than a limit.

A further aspect of the invention relates to a computer program for determining an optimized pulse pattern and/or for operating a converter system, which, when being executed by a processor, is adapted for performing the method as described above.

A further aspect of the invention relates to a computer-readable medium, in which such a computer program is stored. A computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to a controller for a converter system, which is adapted for performing the method such as described herein. The controller may be a control system, which comprises one or more controllers of the converters. The controller and/or the control system also may comprise a computing device, which determines the optimized pulse patterns offline.

It has to be understood that features of the method as described in the above and in the following may be features of the computer program, computer-readable medium, controller and/or converter system as described in the above and in the following, and vice versa.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 schematically shows a converter system according to an embodiment of the invention.

Fig. 2 shows a diagram illustration of an optimized pulse pattern with quarter-wave symmetry and only positive pulses in the first half period.

Fig. 3 shows a flow diagram for a method for determining optimized pulse patterns and for operating a converter system according to an embodiment of the invention.

Fig. 4 shows diagrams with amplitudes of higher order harmonics produced by the method of Fig. 3.

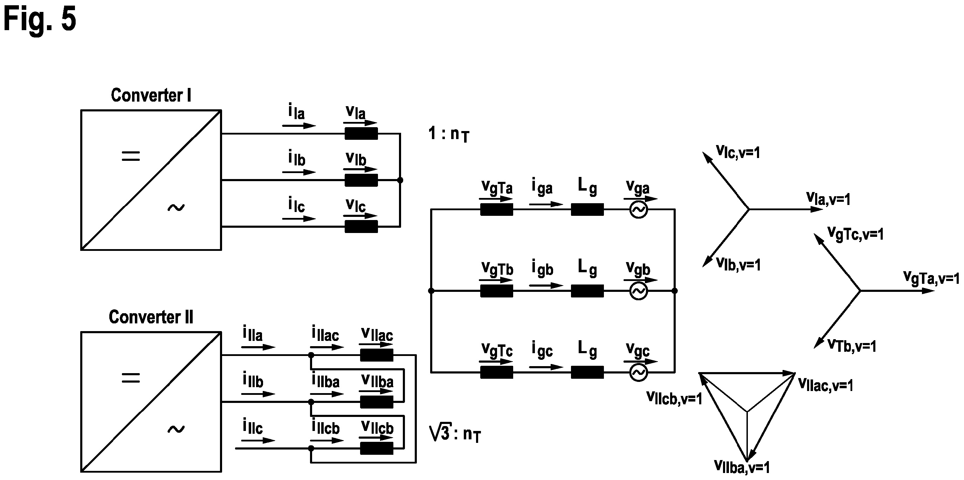

Fig. 5 shows a part of the converter system indicating electric quantities used in the description.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

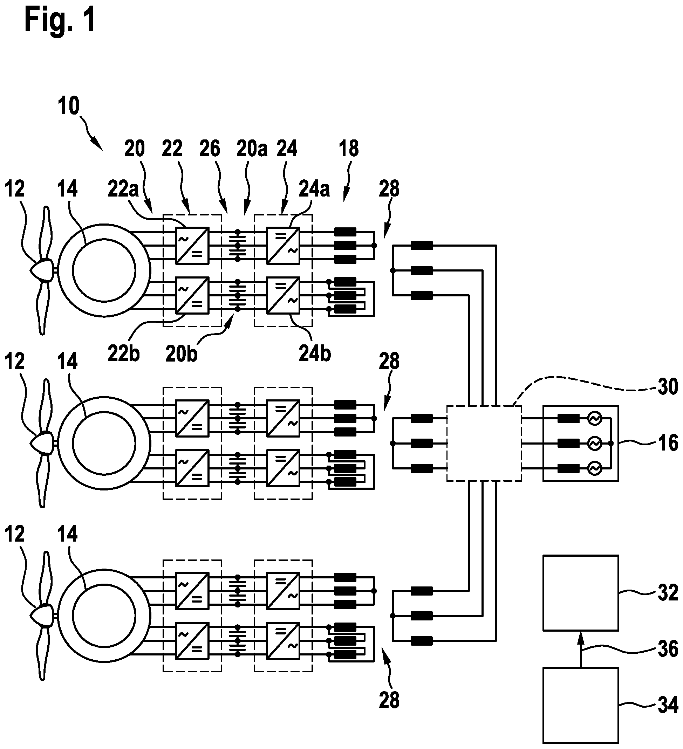

Fig. 1 shows a power plant 10, which comprises a plurality of wind turbines 12 driving generators 14, which supply an external electrical grid 16 via a converter system 18.

The converter system 18 comprises a plurality of converter sets 20, each of which comprises a rectifier set 22 and an inverter set 24, which are interconnected via a DC link 26. For each generator 14, a converter set 20 comprises a pair of converters 20a, 20b which are connected to two three-phase winding systems of the respective generator 14 via the rectifier set 22. The converter system 18 may be a three-phase system. The rectifier set 22 comprises two rectifiers 22a, 22b and the inverter set 24 comprises two inverters 24a, 24b. It has to be noted that a converter set 22 solely may comprise one converter, i.e. one inverter per inverter set 24 and/or one rectifier per rectifier set 22.

The converters 20a, 20b and in particular the rectifiers 22a, 22b and inverters 24a, 24b may be three-level (3L) medium voltage converters and/or may comprise semiconductor switches composed of Integrated Gate Commutated Thyristors (IGCTs).

On a grid side, each pair of converter sets 20 is connected to a transformer 28. The inverters 24a, 24b of a converter set 20 are connected to the secondary windings of the respective transformer 28, which may be wye and delta connected. The primary windings of the transformer 28 are interconnected in parallel (or also in series) to a point of common connection 30, which interconnects the converter system 18 with the electrical grid 16. Another transformer may be present at the point of common connection 30 to further increase the AC voltage amplitude. The electrical grid 16 may simply be another converter which rectifies the AC voltage to be transferred onshore by a high voltage direct current (HVDC) connection.

With each converter set 20, the AC voltage of the two winding systems of the generator 14 is converted to a DC voltage by the rectifier sets 22 and then again to AC voltage at a grid frequency by the inverter set 24. The generated power is injected to the electrical grid 16 via the wye/delta - wye transformers 28. In general, the grid side of each converter set 20 may comprise more than two inverters 24a, 24b or only one inverter 24a, 24b.

The fundamental voltage component at the output of the $l^{th}$ inverter 24a, 24b in each set of secondary three-phase windings of the transformer typically has a phase shift of $(l - 1) . 60/L$ degrees, where $L$ is the number of secondary three-phase windings in each transformer 28 and $l$ = 1,2, ..., $L$. The transformer 28 that connects the inverters 24a, 24b to the grid typically introduces a phase shift of $-(l - 1) \cdot 60/L$ degrees to the harmonics of the $l^{th}$ inverter output voltage. The above combination of phase shifts results to an advantageous cancellation of harmonics at the primary windings of the transformer 28. In the embodiment shown in Fig. 1, $L$ = 2 and the phase shift of $-\frac{60}{2} = -30$ degrees is introduced by the delta winding at the secondary side of the transformer 28.

Fig. 1 furthermore shows a controller or control system 32, which modulates the converter sets 20 and in particular the inverter sets 24. The inverter sets 24 are modulated with optimized pulse patterns 36, which are stored in the controller 32. The inverters 24a, 24b of the same inverter set 24 are modulated with the same set of optimized pulse patterns 36, however optionally phase-shifted with respect to each other (depending on the transformer secondary winding connection). Different inverter sets 24 are modulated with different optimized pulse patterns 36 such as described herein. The optimized pulse patterns 36 may be determined and optimized offline by a computing device 34.

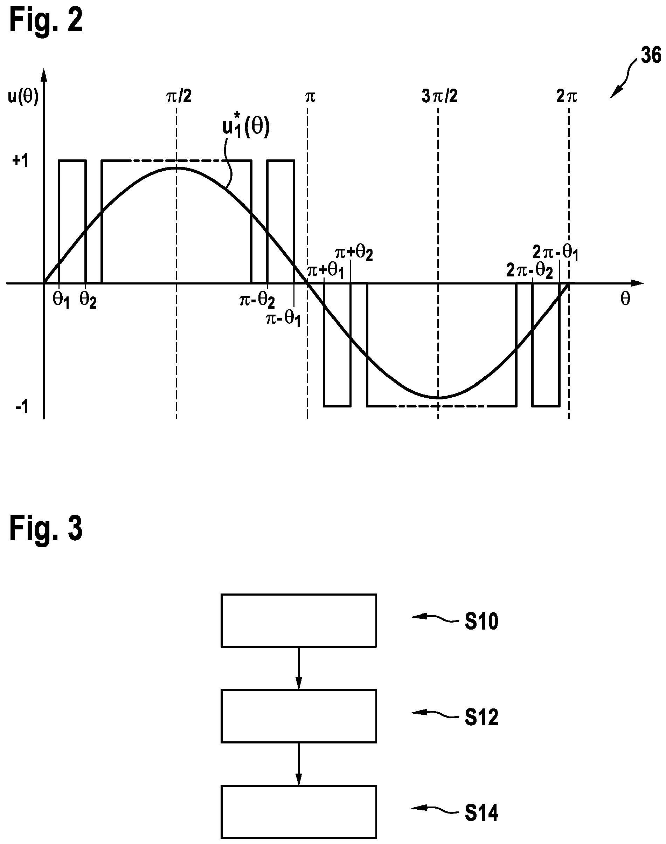

Fig. 2 shows a diagram illustrating an optimized pulse pattern 36 with quarter wave symmetry. The optimized pulse pattern 36 is composed of a set of switching transitions (here between the switching states +1, 0, -1) at switching angles $\theta_i$.

The switching angles $\theta_i$ are calculated in such a way that certain constraints on the voltage harmonics are satisfied. The constraints may be set by grid standards or other project requirements. The latter refers in most cases to the limitation or even elimination of the inverter-induced harmonics in a specific frequency range where electrical resonances appear. Such resonances may be caused by a capacitance of a cable that connects the point of common connection 30 to the electrical grid 16.

Fig. 3 shows a flow diagram for a method for determining optimized pulse patterns 36 and for operating the converter system 18. In general, the method as described in the following is applicable to any converter system 18 with at least two converter sets 20, which are operated by optimized pulse patterns 36 and which are interconnected at a point of common connection 30.

In step S10, the optimized pulse patterns 36 are determined by the computing device 34 and stored in the controller 32, for example in a table. The entries in the table may be indexed by modulation index and pulse number and optionally operation point. For each converter set 20 and in particular each inverter set 24, there is an optimized pulse pattern 36 for each modulation index and pulse number and optionally operation point. Each such an optimized pulse pattern comprises a set of switching transitions encoding at which switching angles $\theta_i$ the converter set 20 and/or inverter set 24 is switched to the corresponding switching state. Step S10 may be performed offline.

In step S12, which is performed online, the controller 32 determines a modulation index and pulse number and optionally operation point for example based on a current controller and a desired converter switching frequency. For each converter set 20 and/or inverter set 24, an optimized pulse pattern 36 is loaded from a table of optimized pulse patterns 36 based on a pulse number and modulation index and optionally operation point.

In step S14, which is also performed online, the respective converter set 20 and/or inverter set 24 is modulated with the respective optimized pulse pattern 36. The inverters 24a, 24b of the inverter set 24 may be modulated phase-shifted with respect to each other. This may be done by determining switching times from the switching angles and by determining switch transitions from the switching states (switch positions) and by switching the semiconductor switches of the converters 20a, 20b and/or inverters 24a, 24b into the switch positions at the switching times.

The optimized pulse patterns 36 have switching transitions, such that each of the converter sets 20 and/or inverter sets 24 generates at least one higher order harmonic and the at least one higher order harmonic of the converter sets 20 and/or inverter sets 24 cancels each other at least partially at the point of common connection 30.

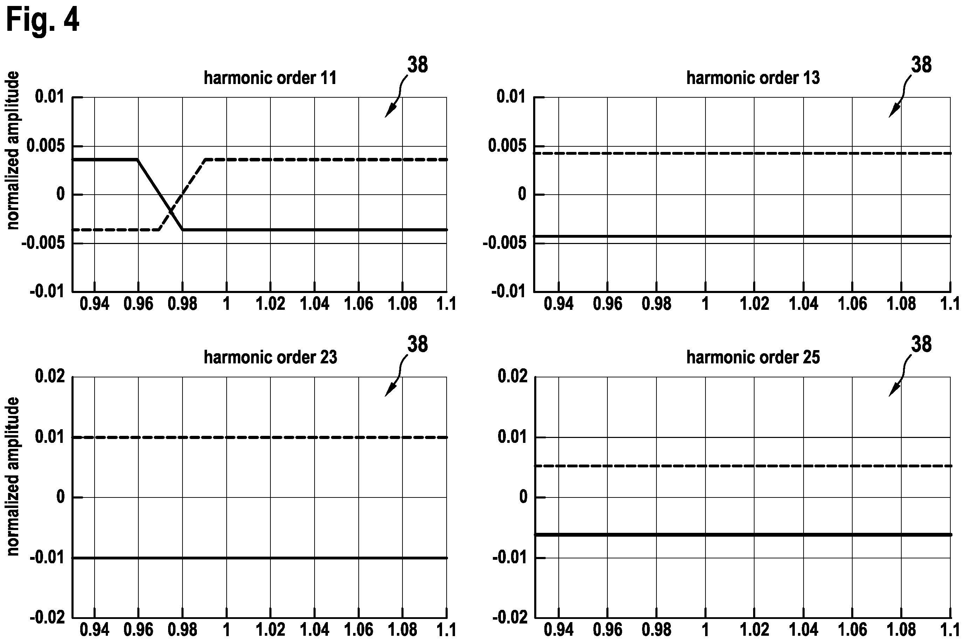

Fig. 4 shows diagrams of normalized amplitudes of four different higher order harmonics 38, in particular of the ones of order 11, 13, 23 and 25. Each diagram shows the normalized amplitudes of two converter sets 20 and/or two inverter sets 24, which are depicted for different values of the modulation index (axis to the right). The amplitudes of the voltage harmonics have been normalized to half the DC link voltage for the two different optimized pulse patterns 36.

In this embodiment, the two converter sets 20 and/or two inverter sets 24 produce the higher order harmonics 38, which then cancel each at the point of common connection 30. As can be seen, this is achieved by having amplitudes of the same magnitude but opposite sign, which also can be seen as a phase shift of 180°.

In general, the at least two converter sets 20 and/or inverter sets 24 may generate higher order harmonics 38 of the same frequency, such that an amplitude of a sum of the generated higher order harmonics 38 of the same frequency at the point of common connection 30 is smaller than an amplitude of the generated higher order harmonics 38 of the same frequency. The at least two converter sets 20 and/or inverter sets 24 may generate higher order harmonics 38 of the same frequency, which have equal amplitudes.

The at least two converter sets 20 and/or inverter sets 24 also may generate higher order harmonics 38 of the same frequency, which are phase shifted with respect to each other, such that they cancel each other at least partially at the point of common coupling 30.

It also may be that each of the at least two converter sets 20 and/or inverter sets 24 generates more than one higher order harmonic 38, which cancel with the higher order harmonics 38 of the other converter sets.

Returning to Fig. 3, in step S10, an optimization problem for the generation of the OPPs is solved which is formulated as described in the following.

As example, three-level optimized pulse patterns 36, such as shown in Fig. 2, are considered. However, other numbers of voltage levels are also possible. An optimized pulse pattern 36 for one inverter set 24 is defined by the switching angles

$$\theta_1, \theta_2, \dots, \theta_N \leq 2\pi$$

and the corresponding switching transitions

$$\Delta u_1, \Delta u_2, \dots, \Delta u_N \quad \in \{-1,1\}$$

where N is the number of switching angles within one fundamental period. In the example presented here, three-level optimized pulse patterns 36 with an initial value $u(0) = 0$ and $N = 2k$, $k \in \mathbb{N}$ are considered.

A displacement of 30 degrees may be applied to the switching angles of the inverters connected to the delta winding of each transformer 28. As already mentioned, in the case of a transformer with $L$ windings, a phase shift of $-(l - 1) \cdot 60/L$ degrees is introduced by the transformer in the $l^{th}$ winding. To cancel out the phase shift of the fundamental harmonics a switching angles displacement of $(l - 1) \cdot 60/L$ must be introduced by the converter controller.

**Quarter-wave symmetry, solely one converter / inverter set**

In the case of quarter-wave symmetry, only the switching angles in one quarter of the fundamental period are considered:

$$0 < \theta_1 < \cdots < \theta_d < \frac{\pi}{2},$$

where d is the pulse number, equal to the number of switching angles within a quarter of the fundamental period. The switching function harmonics of phase a are given by

$$u_a(\theta) = \sum_{v \in (1+2k), k \in \mathbb{N}_0} b_v \sin(v\theta)$$

where

$$b_v = \frac{1}{v} \frac{4}{\pi} \sum_{i=1}^{d} \Delta u_i \cos v\theta_i$$

The vectors of the switching angles and the switching transitions can be defined as follows:

$$\widetilde{\boldsymbol{\Theta}} = [\theta_1, \theta_2, \dots, \theta_d]^T$$

$$\boldsymbol{f} = [\Delta u_1, \Delta u_2, \dots, \Delta u_d]^T$$

The optimization problem has the form

$$\underset{\widetilde{\boldsymbol{\Theta}}}{\text{minimize}} \quad J(\widetilde{\boldsymbol{\Theta}})$$

$$\text{subject to } A\,\widetilde{\boldsymbol{\Theta}} - \boldsymbol{b} \leq 0$$

$$g_{eq}(\widetilde{\boldsymbol{\Theta}}) = 0$$

$$g_{ineq}(\widetilde{\boldsymbol{\Theta}}) \leq 0$$

The objective function is typically a quantity that expresses the current ripple at the transformer winding:

$$J(\widetilde{\boldsymbol{\Theta}}) = \sum_{v \in (6k \pm 1), k \in \mathbb{N}_0} \left(\frac{b_v}{v}\right)^2.$$

Only a finite number of harmonics 38 may be considered. The consideration of the harmonics up to an order of $v = 97$ may be considered sufficient for medium voltage converters.

The linear equality constraints refer to (3). The matrix $A$ has a dimension of (d+1) $x\ d$ :

$$A = \begin{bmatrix} -1 & 0 & 0 & \dots & & 0 \\ 0 & 1 & -1 & \ddots & & \vdots \\ \vdots & \ddots & 1 & -1 & & \\ & & & \ddots & \ddots & 0 \\ & & & & 1 & -1 \\ 0 & \dots & & & 0 & 1 \end{bmatrix}$$

whereas the vector $\boldsymbol{b}$ with a length of $d + 1$ is given by

$$\boldsymbol{b} = \begin{bmatrix} -\Delta\theta_{minj} \\ \vdots \\ -\Delta\theta_{min} \\ \pi/2 - \Delta\theta_{min}/2 \end{bmatrix},$$

where $\Delta\theta_{min} = 2\pi f_1 \Delta T_{min}$, $f_1$ is the fundamental frequency and $\Delta T_{min}$ the minimum allowed time duration between two switchings of the same phase for the grid side converter.

The first non-linear equality constraint ensures that the desired modulation index $m$ is achieved:

$$g_{eq}(\widetilde{\boldsymbol{\Theta}}) = \frac{4}{\pi}[\cos(\theta_1), \dots, \cos(\theta_d)][\Delta u_1, \dots, \Delta u_d]^T - m.$$

The non-linear inequality constraint defines limits for individual harmonics of each converter. For a harmonic of order v it is given by

$$g_{ineq}(\widetilde{\boldsymbol{\theta}}) = \left(\frac{1}{v}\frac{4}{\pi}[\cos(v\theta_1), \dots, \cos(v\theta_d)][\Delta u_1, \dots, \Delta u_d]^T\right)^2 - u_{v\,\max}^2,$$

where $u_{v\max}$ is the maximum allowed amplitude of the $v^{th}$ switching function harmonic.

**Half-wave symmetry, solely one converter / inverter**

In the case of half-wave symmetry, the switching function harmonics of the phase a are computed by:

$$u_a(\theta) = \sum_{v\in(1+2k),k\in\mathbb{N}_0} a_v \cos(v\theta) + \sum_{v\in(1+2k),k\in\mathbb{N}_0} b_v \sin(v\theta) \quad \text{where}$$

$$a_v = -\frac{1}{v}\frac{2}{\pi}\sum_{i=1}^{2d} \Delta u_i \sin v\theta_i$$

$$b_v = \frac{1}{v}\frac{2}{\pi}\sum_{i=1}^{2d} \Delta u_i \cos v\theta_i$$

and d is the pulse number. For the switching angles, there is the condition

$$0 < \theta_1 < \cdots < \theta_{2d} < \pi.$$

The matrix **A** of the linear constraints has the same form as in for quarter-wave symmetry but a dimension of (2*d* + 1)*x*2*d*. The vector **b** with a length of 2*d* + 1 is given by

$$\boldsymbol{b} = \begin{bmatrix} -\Delta\theta_{min} \\ \vdots \\ -\Delta\theta_{min} \\ \pi - \Delta\theta_{min}/2 \end{bmatrix}.$$

The objective function is given by

$$J(\widetilde{\boldsymbol{\theta}}) = \sum_{v\in(6k\pm1),k\in\mathbb{N}} \left(\frac{b_v}{v}\right)^2 + \sum_{v\in(6k\pm1),k\in\mathbb{N}} \left(\frac{a_v}{v}\right)^2.$$

The first non-linear equality constraint (desired modulation index *m*) is given in this case by:

$$g_{eq}(\widetilde{\boldsymbol{\theta}}) = \begin{bmatrix} \frac{2}{\pi}[\cos(\theta_1), \dots, \cos(\theta_{2d_j})]\left[\Delta u_1, \dots, \Delta u_{2d_j}\right]^T - m \\ \frac{2}{\pi}[\sin(\theta_1), \dots, \sin(\theta_{2d_j})]\left[\Delta u_1, \dots, \Delta u_{2d_j}\right]^T \end{bmatrix}.$$

Note that the phase of the fundamental needs to be zero, which means that the amplitude of the cosine component $a_1$ must be zero.
For a harmonic of order *v,* the non-linear inequality constraint is described by

$$g_{ineq}(\widetilde{\boldsymbol{\theta}}) = \left(\frac{1}{v}\frac{4}{\pi}[\cos(v\theta_1),\dots,\cos(v\theta_d)][\Delta u_1,\Delta u_2,\dots,\Delta u_d]^T\right)^2 +$$

$$\left(\frac{1}{v}\frac{4}{\pi}[\sin(v\theta_{j,1}),\dots,\sin(v\theta_{j,d})][\Delta u_{j,1},\Delta u_{j,2},\dots,\Delta u_{j,d_j}]^T\right)^2 - u_{v\,max,j}^2,$$

where $u_{v\,max}$ is the maximum allowed amplitude of the $v^{th}$ switching function harmonic.

Note that when two inverters 24 connected to a wye/delta-wye transformer 28 are considered, then the harmonics that appear at orders around odd multiples of 6 ($v = 6(2k+1) \pm 1, k \in \mathbb{N}_0$) are cancelled out at the primary side of the transformer 28. This can be easily shown when the space vectors of the primary and secondary voltages are considered, as follows:

$$\frac{2}{n_T}\vec{v}_g = \vec{v}_I + \vec{v}_{II} = \left(v_1 e^{j\omega_1 t} + v_5 e^{-j5\omega_1 t} + v_7 e^{j7\omega_1 t} + v_{11} e^{-j11\omega_1 t} + v_{13} e^{j13\omega_1 t} + \cdots\right) +$$

$$+\left(v_1 e^{j(\omega_1 t+\pi/6)} + v_5 e^{j5(\omega_1 t+\pi/6)} + v_7 e^{j7(\omega_1 t+\pi/6)} + v_{11} e^{-j11(\omega_1 t+\pi/6)} + \right.$$

$$\left. v_{13} e^{j13(\omega_1 t+\pi/6)} + \cdots\right) \cdot e^{-j\pi/6} \Longrightarrow \frac{2}{n_T}\vec{v}_g = 2v_1 e^{j\omega_1 t} + 2v_{11} e^{j11\omega_1 t} + 2v_5 e^{j13\omega_1 t} + \cdots$$

**Extension to *M* wind turbines**

Consider now optimized pulse patterns 36 for *M* wind turbines (converter sets 20 and/or inverter sets 24) defined by the switching angles and the corresponding switching transitions. In the following, the term wind turbine may refer more general to a converter set 20 of a more general converter system 18.

The optimized pulse patterns 36 for the inverters 24a, 24b of the $j^{th}$ converter set 20, where $j = 1; M,$ are defined by the switching angles

$$\theta_{j,1}, \theta_{j,2}, \dots, \theta_{j,N} \leq 2\pi$$

and the corresponding switching transitions

$$\Delta u_{j,1}, \Delta u_{j,2}, \dots, \Delta u_{j,N} \in \{-1,1\},$$

where N is the number of switching angles within one fundamental period.

In the extension to a group of wind turbines, different optimized pulse patterns 36 are employed to the converters 20 and/or inverters 24 connected to each generator 14 and/or transformer 28. The optimized pulse patterns 36 that are employed in the inverters 24 connected to the same transformer 28 corresponding to one generator 14 are the same with only a phase shift of 30 degrees for the inverters 24 connected to the delta winding.

**Quarter-wave symmetry**

In the case of quarter- and half-wave symmetry, the following condition holds:

$$0 < \theta_{j,1} < \cdots < \theta_{j,d_j} < \frac{\pi}{2},$$

where $d_j$ is the pulse number of the inverters of the $j^{th}$ wind turbine, equal to the number of switching angles within a quarter of the fundamental period. Not that the OPPs of each wind turbine do not necessarily have the same pulse number.

The switching function harmonics of inverter phase a of the $j^{th}$ wind turbine are given by:

$$u_{a,j}(\theta) = \sum_{v\in(1+2k), k\in\mathbb{N}_0} b_{j,v}\sin(v\theta)$$

where

$$b_{j,v} = \frac{1}{v}\frac{4}{\pi}\sum_{i=1}^{d_j}\Delta u_{j,i}\cos v\theta_{j,i}$$

The vectors of the switching angles and the switching transitions can be defined as follows:

$$\widetilde{\Theta}_j = \left[\theta_{j,1}, \theta_{j,2}, \dots, \theta_{j,d_j}\right]^T$$

$$\tilde{f}_j = \left[\Delta u_{j,1}, \Delta u_{j,2}, \dots, \Delta u_{j,d_j}\right]^T.$$

The optimization problem has now the form

$$\underset{\widetilde{\Theta}_1,..\widetilde{\Theta}_M}{\text{minimize}} \quad J(\widetilde{\Theta}_1, \dots \widetilde{\Theta}_M)$$

$$\text{subject to } A\widetilde{\Theta}_j - b \le 0$$

$$g_{eq}(\widetilde{\Theta}_j) = 0$$

$$g_{ineq}(\widetilde{\Theta}_{j'}) \le 0$$

$$g_{eq}(\widetilde{\Theta}_1, \dots, \widetilde{\Theta}_M) = 0$$

$$g_{ineq}(\widetilde{\Theta}_1, \dots, \widetilde{\Theta}_M) = 0.$$

The objective function is a quantity that expresses the sum of the current ripple of the *M* wind turbines:

$$J(\widetilde{\Theta}_1, \dots \widetilde{\Theta}_M) = \sum_{v\in(6k\pm1),k\in\mathbb{N}}\left(\frac{b_{1v}}{v}\right)^2 + \dots + \sum_{v\in(6k\pm1),k\in\mathbb{N}}\left(\frac{b_{Mv}}{v}\right)^2.$$

The matrix *A* has a dimension of *(d_j + 1) x d_j:*

$$A = \begin{bmatrix} -1 & 0 & 0 & \dots & & 0 \\ 0 & 1 & -1 & \ddots & & \vdots \\ \vdots & \ddots & 1 & -1 & & \\ & & & \ddots & \ddots & 0 \\ & & & & 1 & -1 \\ 0 & & \dots & & 0 & 1 \end{bmatrix},$$

whereas the vector *b* with a length of *d_j + 1* is given by

$$b = \begin{bmatrix} -\Delta\theta_{min,j} \\ \vdots \\ -\Delta\theta_{min,j} \\ \pi/2 - \Delta\theta_{min,j} \end{bmatrix},$$

where $\Delta\theta_{min,j} = 2\pi f_1 \Delta T_{min,j}$, $f_1$ is the fundamental frequency and $\Delta T_{min,j}$ the minimum allowed time duration between two switchings of the same phase for the grid-side inverters 24 of the $j^{th}$ generator 14.

The first non-linear equality constraint ensures that the desired modulation index $m$ will be achieved:

$$g_{eq}(\tilde{\boldsymbol{\Theta}}_j) = \frac{4}{\pi}\left[\cos(\theta_{j,1}), \dots, \cos(\theta_{j,d_j})\right]\left[\Delta u_{j,1}, \dots, \Delta u_{j,d_j}\right]^T - \text{m}.$$

The non-linear inequality constraint defines limits for individual harmonics of the two converters. For a harmonic of order v it is given by

$$g_{ineq}(\tilde{\boldsymbol{\Theta}}_j) = \left(\frac{1}{v}\frac{4}{\pi}\left[\cos(v\theta_{j,1}), \dots, \cos(v\theta_{j,d_j})\right]\left[\Delta u_{j,1}, \dots, \Delta u_{j,d_j}\right]^T\right)^2 - u_{v\,max,j}^2,$$

where $u_{v\,max,j}$ is the maximum allowed amplitude of the $v^{th}$ switching function harmonic for the $j^{th}$ wind turbine.

The last non-linear equality constraint is the one that enforces, when necessary, harmonic cancellation between wind turbines, provided that the phase of the fundamental components is the same for all wind turbines. For a harmonic of order v that needs to be cancelled out between wind turbines, the non-linear constraint is described by the following equation:

$$g_{eq}(\tilde{\boldsymbol{\Theta}}_1, \dots, \tilde{\boldsymbol{\Theta}}_M) = \sum_{j=1}^{M}\left[\cos(v\theta_{j,1}), \dots, \cos(v\theta_{j,d_j})\right]\left[\Delta u_{j,1}, \dots, \Delta u_{j,d_j}\right]^T.$$

Note that the above condition can be also fulfilled if the amplitude of the considered harmonics is zero at each wind turbine. It is up to the optimization algorithm to find out if elimination of the harmonics at each wind turbine separately is sufficient or if cancellation via a phase shift of the corresponding harmonic at each wind turbine is necessary. Note also that for a quarter-wave symmetry, cancellation via a phase is only possible between pairs of wind turbines since the phase of each harmonic is either 0 or 180 degrees.

For pairs of wind turbines, one can also consider a previously computed optimized pulse pattern 36 for one wind turbine and try to find a second computed optimized pulse pattern 36 for which a harmonic 38 of order v has exactly the same amplitude but a phase difference of 180 degrees. For the wind turbines no. 1 and no. 2 ($j$ = 1,2) this is mathematically expressed as follows

$$\left[\cos(v\theta_{2,1}), \dots, \cos(v\theta_{2,d_j})\right]\left[\Delta u_{2,1}, \dots, \Delta u_{2,d_j}\right]^T = -\left[\cos(v\theta_{1,1}), \dots, \cos(v\theta_{1,d_j})\right]\left[\Delta u_{1,1}, \dots, \Delta u_{1,d_j}\right]^T.$$

Alternatively, a non-linear inequality constraint that limits the amplitude of a harmonic can be defined, considering the sum of all harmonics in a group of wind turbines:

$$g_{ineq}(\tilde{\boldsymbol{\Theta}}_1, \dots, \tilde{\boldsymbol{\Theta}}_M) = \left(\frac{1}{v}\frac{4}{\pi}\sum_{j=1}^{M}\left[\cos(v\theta_{j,1}), \dots, \cos(v\theta_{j,d_j})\right]\left[\Delta u_{j,1}, \dots, \Delta u_{j,d_j}\right]^T\right)^2$$

$$-u_{v\,max}^2$$

**Half-wave symmetry**

In the case of half-wave symmetry, the switching function harmonics of the phase a of the $j^{th}$ wind turbine are computed by:

$$u_{a,j}(\theta) = \sum_{v \in (1+2k), k \in \mathbb{N}_0} a_{j,v} \cos(v\theta) + \sum_{v \in (1+2k), k \in \mathbb{N}_0} b_{j,v} \sin(v\theta)$$

where

$$a_{j,v} = -\frac{1}{v}\frac{2}{\pi} \sum_{i=1}^{2d_j} \Delta u_{j,i} sinv\theta_{j,i}$$

$$b_{j,v} = \frac{1}{v}\frac{2}{\pi} \sum_{i=1}^{2d_j} \Delta u_{j,i} cosv\theta_{j,i}$$

and $d_j$ is the pulse number.

The switching angles have the condition

$$0 < \theta_{j,1} < \cdots < \theta_{j,d_j} < \pi.$$

The matrix A of the linear constraints has the same form as above but a dimension of $(2d_j + 1) \times 2d_j$. The vector b with a length of $2d_j + 1$ is given by

$$\boldsymbol{b} = \begin{bmatrix} -\Delta\theta_{min,j} \\ \vdots \\ -\Delta\theta_{min,j} \\ \pi - \Delta\theta_{min,j} \end{bmatrix}.$$

The objective function is given by:

$$J(\widetilde{\boldsymbol{\Theta}}_1, \dots \widetilde{\boldsymbol{\Theta}}_M) = \sum_{v \in (6k \pm 1), k \in \mathbb{N}} \left(\frac{b_{1v}}{v}\right)^2 + \cdots + \sum_{v \in (6k \pm 1), k \in \mathbb{N}} \left(\frac{b_{Mv}}{v}\right)^2 +$$

$$\sum_{v \in (6k \pm 1), k \in \mathbb{N}} \left(\frac{a_{1v}}{v}\right)^2 + \cdots + \sum_{v \in (6k \pm 1), k \in \mathbb{N}} \left(\frac{a_{Mv}}{v}\right)^2.$$

The first non-linear equality constraint (desired modulation index m) is given in this case by:

$$g_{eq}(\widetilde{\boldsymbol{\Theta}}_j) = \begin{bmatrix} \frac{2}{\pi}\left[\cos(\theta_{j,1}), \dots, \cos(\theta_{j,2d_j})\right]\left[\Delta u_{j,1}, \dots, \Delta u_{j,2d_j}\right]^T - m \\ \frac{2}{\pi}\left[\sin(\theta_{j,1}), \dots, \sin(\theta_{j,2d_j})\right]\left[\Delta u_{j,1}, \dots, \Delta u_{j,2d_j}\right]^T \end{bmatrix}.$$

Note that the phase of the fundamental needs to be zero, which means that the amplitude of the cosine component $a_{j,1}$ must be zero.

For a harmonic of order v, the non-linear inequality constraint is described by

$$g_{ineq}(\widetilde{\boldsymbol{\Theta}}_j) = \left(\frac{1}{v}\frac{4}{\pi}[\cos(v\theta_{j,1}), \dots, \cos(v\theta_{j,d_j})][\Delta u_{j,1}, \Delta u_{j,2}, \dots, \Delta u_{j,d_j}]^T\right)^2 +$$

$$\left(\frac{1}{v}\frac{4}{\pi}[\sin(v\theta_{j,1}), \dots, \sin(v\theta_{j,d_j})][\Delta u_{j,1}, \Delta u_{j,2}, \dots, \Delta u_{j,d_j}]^T\right)^2 - u_{v\,max,j}^2$$

where $u_{v\,max,j}$ is the maximum allowed amplitude of the $v^{th}$ switching function harmonic for the $j^{th}$ wind turbine.

The last non-linear equality constraint is the one that enforces harmonic cancellation between wind turbines, provided that the phase of the fundamental components is the same for all wind turbines. For a harmonic of order v that needs to be cancelled out between wind turbines, the non-linear constraint is described by the following equation:

$$g_{eq}(\widetilde{\boldsymbol{\Theta}}_1, \dots, \widetilde{\boldsymbol{\Theta}}_M) = \begin{bmatrix} \sum_{j=1}^{M} \left[\cos(v\theta_{j,1}), \dots, \cos(v\theta_{j,2d_j})\right] & \left[\Delta u_{j,1}, \dots, \Delta u_{j,2d_j}\right]^T \\ \sum_{j=1}^{M} \left[\sin(v\theta_{j1}), \dots, \sin(v\theta_{j,2d_j})\right] & \left[\Delta u_{j,1}, \dots, \Delta u_{j,2d_j}\right]^T \end{bmatrix}.$$

Note that, as in the quarter-wave symmetry, the above condition can be also fulfilled if the amplitude of the considered harmonics is zero at each wind turbine. It is up to the optimization algorithm to find out if elimination of the harmonics at each wind turbine separately is sufficient or if cancellation via a phase shift of the harmonic of interest at each wind turbine is necessary. For a half-wave symmetry, cancellation via a phase is possible in groups of more than 2 wind turbines, since the phase of each harmonic can take any value between 0 and 180 degrees. Furthermore, a phase displacement due to e.g. the impedance of the cable between the wind turbines can also be considered by adding it in the angle within the sine and cosine terms in the above formula.

Alternatively, a non-linear inequality constraint that limits the amplitude of a harmonic can be set, considering the sum of all harmonics with the same order in a group of wind turbines:

$$g_{ineq}(\widetilde{\boldsymbol{\Theta}}_1, \dots, \widetilde{\boldsymbol{\Theta}}_M) = \left(\frac{1}{v}\frac{4}{\pi}\sum_{j=1}^{M}\left[\cos(v\theta_{j,1}), \dots, \cos(v\theta_{j,d_j})\right] \left[\Delta u_{j,1}, \dots, \Delta u_{j,d_j}\right]^T\right)^2 +$$

$$\left(\frac{1}{v}\frac{4}{\pi}\sum_{j=1}^{M}\left[\sin(v\theta_{j,1}), \dots, \sin(v\theta_{j,d_j})\right] \left[\Delta u_{j,1}, \dots, \Delta u_{j,d_j}\right]^T\right)^2 - u_{v\,max}^2.$$

In summary, the optimized pulse patterns 36 are calculated by considering the switching angles in a single optimization problem for all optimized pulse patterns 36. The optimization problem comprises a constraint that the higher order harmonics 38 of a same frequency generated by the at least two converter sets 20 cancel each other at least partially. The optimization problem comprises an objective function, demanding that the sum of the current ripples generated by the at least two converter sets 20 is minimized. The optimization problem may comprise a constraint that a modulation index for each optimized pulse pattern 36 for each of the at least two converter sets 20 is met. The optimization problem may comprise a constraint that at least some of the higher order harmonics 38 generated by the at least two converter sets 20 are limited. The optimization problem may comprise a constraint that the amplitude of the sum of higher order harmonics 38 of the same frequency generated by the at least two converter sets 20 is limited. The optimization problem may comprise a constraint that the amplitude of the sum of higher order harmonics 38 of the same frequency generated by the at least two converters 20 is 0.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| 10 | power plant |
| 12 | wind turbine |
| 14 | generator |
| 16 | electrical grid |
| 18 | converter system |
| 20 | converter set |
| 20a, 20b | converter |
| 22 | rectifier set |
| 22a 22b | rectifier |
| 24 | inverter set |
| 24a, 24b | inverter |
| 26 | DC link |
| 28 | transformer |
| 30 | point of common connection |
| 32 | controller or control system |
| 34 | computing device |
| 36 | optimized pulse pattern |
| 38 | higher order harmonic |

**Claims**

1. A method of operating a converter system (18), the converter system (18) comprising at least two converter sets (20) interconnected at a point of common connection (30),
   the method comprising:

   for each converter set (20) of the at least two converter sets, loading an optimized pulse pattern (36) from a table of optimized pulse patterns based on a pulse number and modulation index, wherein each optimized pulse pattern (36) comprises a set of switching transitions encoding at which switching angles ($\theta_i$) the converter (20) is switched to a corresponding switching state;
   modulating the respective converter (20) with the respective optimized pulse pattern (36);
   wherein the optimized pulse patterns (36) have switching transitions, such that each of the at least two converter sets (20) generates at least one higher order harmonic and the at least one higher order harmonic (38) of the at least two converter sets (20) cancels out at least partially at the point of common connection (30).

2. The method of claim 1,
   wherein the at least two converter sets (20) generate higher order harmonics (38) of the same frequency, such that an amplitude of the sum of the generated high order harmonics (38) of the same frequency at the point of common connection (30) is smaller than a maximum amplitude of the generated higher order harmonics (38) of the same frequency.

3. The method of claim 1 or 2,
   wherein the at least two converter sets (20) generate higher order harmonics (38) of the same frequency, which are phase shifted with respect to each other, such that they cancel each other at least partially at the point of common coupling (30).

4. The method of one of the previous claims,
   wherein the at least two converter sets (20) generate higher order harmonics (38) of the same frequency, which have equal amplitudes.

5. The method of one of the previous claims,
   wherein each of the at least two converter sets (20) generates more than one higher order harmonics (38), which cancel out with the higher order harmonics (38) of the other converter sets.

6. The method of one of the previous claims, further comprising:

   calculating the optimized pulse patterns (36) by considering the switching angles ($\theta_i$) in a single optimization problem for all converter sets (36);

wherein the optimization problem comprises a constraint that at least some of the higher order harmonics (38) of a same frequency generated by the at least two converter sets (20) cancel each other at least partially.

7. The method of claim 6,

wherein the optimization problem comprises an objective function, demanding that the sum of the current ripples generated by the at least two converter sets (20) is minimized; and/or

wherein the optimization problem comprises a constraint that a modulation index for each optimized pulse pattern (36) for each of the at least two converter sets (20) is met; and/or

wherein the optimization problem comprises a constraint that at least some of the higher order harmonics (38) generated by the at least two converter sets (20) are limited.

8. The method of claim 6 or 7,

wherein the optimization problem comprises a constraint that the amplitude of the sum of higher order harmonics (38) of the same frequency generated by the at least two converter sets (20) is limited; or

wherein the optimization problem comprises a constraint that the amplitude of the sum of higher order harmonics (38) of the same frequency generated by the at least two converter sets (20) is 0.

9. The method of one of the previous claims,

wherein for two converter sets (20) two different optimized pulse pattern (36) are loaded, which have been calculated with respect to different operating points;

wherein the optimized pulse pattern (36) to be loaded is selected with respect to an operation point determined for the respective converter set (20).

10. A computer program for operating a converter system (18), which, when being executed by a processor, is adapted for performing the method of one of the previous claims.

11. A computer-readable medium, in which a computer program according to claim 11 is stored.

12. A controller (32) for a converter system (18), which is adapted for performing the method of one of claims 1 to 9.

13. A converter system (18), comprising:

at least two converters (20) interconnected at a point of common connection;

a controller (32) according to claim 12.

14. The converter system (18) of claim 14,

wherein a transformer (28) is interconnected between each electrical converter (20) and the point of common connection (30).

15. A method for determining optimized pulse patterns (36), the method comprising:

calculating optimized pulse patterns (36) for at least two converter sets (20), which are connected at a point of common connection (30), wherein each optimized pulse pattern (36) for one of the at least two converter sets (20) comprises a set of switching transitions encoding at which switching angles ($\theta_i$) the converter set (20) is switched to a corresponding switching state;

wherein the optimized pulse patterns (36) are calculated by modifying the switching angles ($\theta_i$) in a single optimization problem for all optimized pulse patterns (36), until optimization objectives are reached;

wherein the optimization problem comprises an objective function, demanding that the sum of current ripples generated by the at least two converters (20) is minimized;

wherein the optimization problem comprises a constraint that the amplitude of the sum of higher order harmonics (38) of a frequency generated by the at least two converters (20) is smaller than a limit.

# Fig. 1

# Fig. 2

# Fig. 3

Fig. 4

harmonic order 11

harmonic order 13

harmonic order 23

harmonic order 25

normalized amplitude

normalized amplitude

**Fig. 5**

**EP 4 391 337 A1**

Europäisches
Patentamt

European
Patent Office

Office européen
des brevets

# EUROPEAN SEARCH REPORT

Application Number

EP 22 21 5668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/129766 A1 (ABB TECHNOLOGY OY [FI]) 3 August 2017 (2017-08-03) * page 2, line 25 – page 3, line 31 * * page 5, line 31 – page 6, line 23 * * figures 3,4 * ----- | 1-15 | INV. H02M1/12 H02M1/00 H02M5/458 H02M7/493 |
| A | EP 2 469 692 A1 (ABB RESEARCH LTD [CH]) 27 June 2012 (2012-06-27) * paragraphs [0034], [0073] – [0078] * ----- | 1-15 | |
| A | EP 3 806 311 A1 (ABB SCHWEIZ AG [CH]) 14 April 2021 (2021-04-14) * paragraph [0041] * ----- | 1-15 | |
| A | US 5 065 303 A (NGUYEN VIETSON M [US] ET AL) 12 November 1991 (1991-11-12) * column 5, lines 27-58 * ----- | 1-15 | |

TECHNICAL FIELDS SEARCHED (IPC)

H02M

The present search report has been drawn up for all claims

| Place of search | Date of completion of the search | Examiner |
|---|---|---|
| The Hague | 15 May 2023 | Standaert, Frans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 5668

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2023

| Patent document cited in search report | | Publication date | Patent family member(s) | | Publication date |
|---|---|---|---|---|---|
| WO 2017129766 | A1 | 03-08-2017 | EP | 3408929 A1 | 05-12-2018 |
| | | | WO | 2017129766 A1 | 03-08-2017 |
| EP 2469692 | A1 | 27-06-2012 | BR | PI1107034 B1 | 20-10-2020 |
| | | | CN | 102545588 A | 04-07-2012 |
| | | | EP | 2469692 A1 | 27-06-2012 |
| | | | JP | 6138414 B2 | 31-05-2017 |
| | | | JP | 2012139092 A | 19-07-2012 |
| | | | KR | 20120073151 A | 04-07-2012 |
| | | | RU | 2011152831 A | 27-06-2013 |
| | | | US | 2012161685 A1 | 28-06-2012 |
| EP 3806311 | A1 | 14-04-2021 | CN | 114651391 A | 21-06-2022 |
| | | | EP | 3806311 A1 | 14-04-2021 |
| | | | US | 2022368247 A1 | 17-11-2022 |
| | | | WO | 2021069259 A1 | 15-04-2021 |
| US 5065303 | A | 12-11-1991 | NONE | | |

EPO FORM P0459

For more details about this annex : see Official Journal of the European Patent Office, No. 12/82